# FASCICULE DE BREVET EUROPEEN

(11) **EP 1 490 839 B1**
(45) Date de publication et mention de la délivrance du brevet: **16.12.2020**
(21) Numéro de dépôt: 03725301.0
(22) Date de dépôt: 18.03.2003
(51) Int. Cl.: G07C 9/00, G08C 19/28

(54) **PROCEDE DE REPROGRAMMATION D OBJETS BIDIRECTIONNELS**
VERFAHREN ZUR UMPROGRAMMIERUNG BIDIREKTIONALER GEGENSTÄNDEN
METHOD FOR REPROGRAMMING BIDIRECTIONAL OBJECTS

(30) Priorité: 26.03.2002 FR 0203752
(43) Date de publication de la demande: 29.12.2004
(73) Titulaire: SOMFY ACTIVITES SA, 74300 Cluses (FR)
(72) Inventeur: ORSAT, Jean-Michel, 74300 CHATILLON-SUR-CLUSES (FR); AUTRET, Capucine, 74460 Marnaz (FR)
(74) Mandataire: Verriest, Philippe
(86) Numéro de dépôt international: PCT/FR2003/000860
(87) Numéro de publication internationale: WO 2003/081352

(56) Documents cités:
- EP-A- 0 688 929
- US-A- 5 148 159

## Description

L'invention se rapporte au domaine de la commande à distance d'actionneurs et notamment à la commande sans fil d'actionneurs utilisés dans le confort et la sécurité du bâtiment, par exemple pour l'éclairage, la manœuvre des fermetures, des protections solaires, des systèmes de ventilation et d'air conditionné etc...

Dans la conception actuelle de tels systèmes, de tels actionneurs et/ou capteurs associés sont pilotés par des unités de contrôle ou points de commande capables de communiquer en réception mais aussi en émission par un lien bidirectionnel, typiquement radiofréquences. Les actionneurs ou capteurs et les unités de commande peuvent donc être qualifiées de façon générique d'objets bidirectionnels. Les actionneurs ou capteurs sont souvent disposés dans des parties difficilement accessibles pour l'installateur, et plus encore pour l'utilisateur.

Les points de commande sont unidirectionnels ou bidirectionnels, nomades ou fixes. Bien souvent, un point de commande fixe est lui-même alimenté par piles, ce qui évite les câblages. Quand un point de commande est équipé d'un émetteur récepteur, la fonction réception peut n'être activée que sur commande ou par intermittence pour limiter la consommation.

Une procédure d'appariement permet d'associer à un couple formé d'un actionneur et d'un point de commande de partager un identifiant commun. Le partage d'un identifiant commun permet ensuite à l'actionneur de reconnaître les commandes provenant du point de commande, pour y répondre. La procédure d'appariement peut être répétée pour commander plusieurs actionneurs à partir d'un point de commande ou encore pour qu'un actionneur réponde à plusieurs points de commande. Selon les modes d'appariement, l'identifiant est transmis depuis l'unité de contrôle de l'actionneur vers le point de commande qui l'enregistre, ou au contraire depuis le point de commande vers l'unité de contrôle de l'actionneur, qui l'enregistre. Des solutions d'appariement sont par exemples décrites dans les demandes de brevet US-A-4 529 980 ou US-A-5 148 159 ou encore dans les demandes de brevet français déposées par la demanderesse sous les numéros 01 09369 du 13.07.01 et 01 16709 du 21.12.01.

Dès qu'il s'agit non seulement de confort mais aussi de sécurité, un problème se pose lors de la perte ou du vol d'un point de commande. De fait, un actionneur volé peut être utilisé à distance, par exemple pour désactiver une alarme ou encore pour ouvrir une porte ou un volet roulant.

Le brevet US Re 36,703 donne une solution à un tel problème. Il s'agit ici d'une unité de contrôle d'actionneur pour portes de garages susceptible d'apprendre plusieurs identifiants, tous différents, propres à différents émetteurs de télécommande. Un pointeur logiciel ou mécanique permet d'affecter un nouvel emplacement mémoire à un nouvel émetteur. En cas de perte (ou vol) d'un des émetteurs, il suffit de pointer l'emplacement mémoire correspondant pour y loger le code de l'émetteur de remplacement. L'ancien émetteur devient donc invalidé, dans la mesure où son identifiant est écrasé par l'écriture d'un nouvel identifiant. Cette solution nécessite de conserver en lieu sûr une table des relations entre émetteurs et emplacements mémoire affectés à chaque émetteur.

EP-A-0 688 929 décrit des mécanismes d'apprentissage dans des systèmes à saut de code (*code hopping*), avec une solution analogue. Ce document précise qu'il peut être nécessaire d'exclure un transmetteur du système. La solution proposée est la suivante : un encodeur est exclu en supprimant les codes correspondants dans le décodeur - autrement dit simplement en désappariant l'encodeur et le décodeur.

Une autre solution consiste à recommencer une procédure d'appariement de l'ensemble des actionneurs. La demande de brevet français déposée le 13.07.01 sous le numéro 01 09369 propose à cette fin des actionneurs, pour lesquels une action sur l'alimentation électrique provoque dont la mise en mode de programmation. Une autre solution consiste à réinitialiser un actionneur par mise à la phase d'un fil spécifique, comme proposé dans FR-A-2 808 834. On comprend qu'un tel moyen va nécessiter de reprendre complètement les procédures d'appariement. Pour pallier la perte ou la disparition d'un point de commande, on est donc conduit à effacer les identifiants de l'ensemble des points de commande dans l'installation. En outre, cette solution est complexe et n'est pas toujours possible à mettre en œuvre, notamment dans le cas de points de commande préaffectés en usine à des actionneurs ou encore lorsque les différents actionneurs ne sont pas accessibles.

Dans le domaine des serrures électroniques, il a été proposé de profiter de l'introduction d'une nouvelle clé pour éjecter le code de la précédente. Une telle méthode est utilisée par exemple dans les documents EP-A-0 171 323 ou plus anciennement US-A-3 821 704. Dans une serrure de chambre d'hôtel, une clé électronique contient un code à deux champs A et B. Le champ A contient le code d'ouverture valide, le champ B contient le champ d'autorisation. Au client suivant est fourni une nouvelle clé contenant cette fois B et C. Le premier champ est utilisé pour commander l'ouverture s'il y a identité entre celui lu sur la clé et celui enregistré dans la serrure. S'il n'y a pas identité, la serrure compare ce premier champ au code d'autorisation enregistré dans la serrure. S'il y a identité, la serrure enregistre ce code comme code d'ouverture valide et enregistre le deuxième champ de la clé comme nouveau code d'autorisation.

EP-A-1 085 481 propose une installation dans laquelle l'ensemble des éléments de l'installation partagent un code de site, unique au site. Le code de site est utilisé par les transmetteurs pour crypter les informations transmises au récepteur. Le récepteur décrypte les informations qu'il reçoit des transmetteurs, à l'aide du code de site. Il répond aux ordres d'un transmetteur si les informations qu'il reçoit de la part de ce transmetteur sont cohérentes avec les informations reçues précédemment de la part de ce transmetteur. L'avantage présenté dans ce document est d'éviter toute programmation du récepteur. Toutefois, ce document ne fait pas état du problème de la perte d'un transmetteur ou de la suppression d'un transmetteur; en effet, la solution proposée rend impossible la déprogrammation d'un des transmetteurs.

Il existe donc toujours un problème en cas de perte ou vol d'une unité de commande ou plus sénéralement lorsque l'on souhaite exclure un objet d'un ensemble d'objets appariés.

La présente invention est définie par l'objet des revendications indépendantes.

D'autres caractéristiques et avantages de l'invention apparaîtront à la lecture de la description qui suit, donnée à titre d'exemple et en référence aux dessins qui montrent :
- figure 1, une vue schématique d'une installation permettant la mise en œuvre de l'invention ;
- figure 2, un ordinogramme d'un procédé selon l'invention;
- figure 3 un ordinogramme d'un autre mode de mise en œuvre d'un procédé selon l'invention.

Dans la suite de la description, l'invention est décrite dans un exemple d'application à l'appariement de systèmes domotiques; elle ne se limite pas à de tels systèmes. On utilise dans la suite les mots "transmetteur d'ordre" et "récepteur d'ordre", pour désigner des objets qui ont pour fonction de transmettre ou recevoir les ordres donnés par un utilisateur; un transmetteur d'ordre est aussi couramment appelé unité de commande, tandis qu'un récepteur d'ordres est un actionneur ou un capteur associé. Ces désignations ne sont pas représentatives des fonctionnalités des "transmetteurs" ou "récepteurs", qui du point de vue des signaux, sont capables d'émettre comme de recevoir. On aurait donc pu parler "d'objet bidirectionnel", c'est-à-dire d'un objet présentant des capacités d'émission et de réception. Pour la clarté de l'explication, on utilise les mots "transmetteurs" ou "récepteurs" - qui ne représentent que l'affectation d'un objet bidirectionnel donné à un usage particulier.

On suppose aussi, dans la suite de la description que chaque objet bidirectionnel est muni d'un identifiant univoque; il peut s'agir d'un identifiant correspondant à un code de l'objet, donné en usine et qui n'est pas susceptible d'être modifié; il peut aussi s'agir d'un nombre susceptible d'être modifié, comme un nombre aléatoire choisi dans l'objet ou encore un nombre choisi à l'aide de micro-commutateurs. L'origine de l'identifiant est sans incidence sur le fonctionnement du procédé. On notera aussi que l'identifiant utilisé dans la suite peut être modifié après la définition du groupe ou après l'appariement : il sert simplement, lors de l'appariement, à identifier un objet.

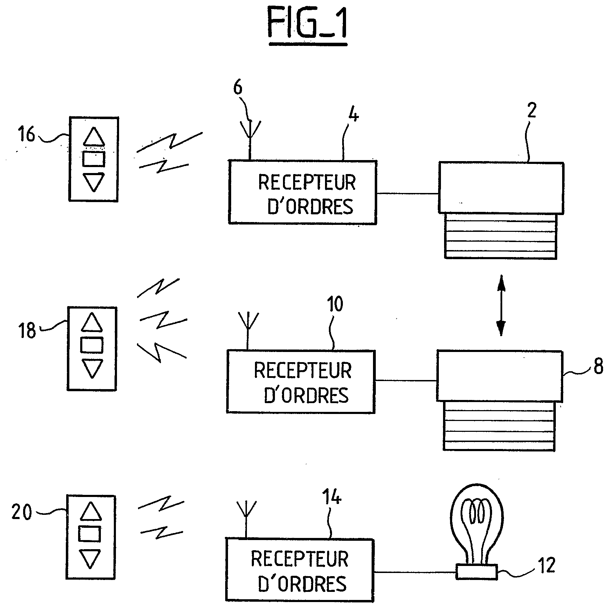

La figure 1 montre une vue schématique d'une installation dans laquelle le procédé peut être mise en œuvre. L'installation comprend un opérateur 2. Cet opérateur peut, par exemple enrouler ou dérouler des stores, des volets roulants ou une porte de garage, actionner un luminaire, ouvrir une porte, enclencher ou déclencher une alarme, etc. A l'opérateur est relié un récepteur. Le récepteur d'ordres présente une antenne 6 qui lui permet de recevoir des ordres transmis par voie hertzienne depuis un transmetteur d'ordres; le récepteur d'ordres 4 peut en outre émettre des signaux, par exemple par la voie hertzienne, à l'aide de la même antenne 6. La transmission par radio des ordres depuis un transmetteur vers un récepteur ou dans le sens inverse est connue en soi et n'est pas décrite plus en détail ici.

La figure 1 montre encore une pluralité d'opérateurs 8, 12, ayant chacun leur récepteur d'ordres 10, 14. Elle montre encore des transmetteurs d'ordres 16, 18 et 20; ceux-ci sont adaptés à transmettre par voie hertzienne un ou des ordres à destination des récepteurs 4, 10, 14, et présentent à cette fin une antenne non représentée. Typiquement, un transmetteur d'ordres, dans le cas de la commande d'un volet roulant, peut transmettre des ordres de montée ou de descente du volet ou d'arrêt du volet; on peut prévoir d'autres ordres, comme la mise du volet dans des positions préprogrammées du volet, des ordres de programmation du volet, etc. Le transmetteur d'ordres présente donc un ou plusieurs dispositifs permettant à l'utilisateur d'entrer une commande, dans le cas le plus simple un ou plusieurs boutons de commande. Un transmetteur d'ordres est aussi adapté à recevoir des signaux depuis le ou les récepteurs d'ordres; on peut, comme dans le cas du récepteur d'ordres, utiliser la même antenne.

On peut prévoir pour le transmetteur d'ordres comme pour le récepteur d'ordres des canaux de transmission divers en émission ou en réception; dans une configuration simple, on utilise la radio, le transmetteur comme l'émetteur constituant alors un "transceiver", c'est-à-dire un émetteur-récepteur.

Parmi les différents objets bidirectionnels - transmetteurs et récepteurs d'ordres - certains sont appariés. L'appariement, décrit dans les documents de l'état de la technique mentionnés plus haut, consiste à faire "apprendre" à chaque objet d'une paire l'identifiant de l'autre objet de la paire; après appariement, un objet d'une paire exécute les ordres qui lui sont transmis par l'autre objet de la paire. Ces ordres peuvent être de nature très diverse selon l'installation; dans une installation de volets roulants, les ordres sont typiquement des ordres de montée ou de descente des volets; on peut aussi prévoir des ordres de programmation pour la création d'autres appariements. Dans une installation d'alarme, l'ordre peut être une mise en marche ou un arrêt de l'alarme ou encore une programmation de fonctions. On peut donc généralement définir par "ordre" une instruction transmise par un objet vers un autre objet.

Il peut dans une installation y avoir autant d'appariements que de paires d'objets et le procédé de reprogrammation décrit ici s'applique indépendamment de la façon dont l'appariement est réalisé.

A titre d'exemple, on considère dans la suite le cas où les paires suivantes sont définies : (4, 16), (10, 16), (10, 18), (4, 20), (10, 20) et (14, 20); le transmetteur 16 commande les récepteurs 4 et 10, le transmetteur 18 commande le récepteur 10 et le transmetteur 20 commande l'ensemble des récepteurs.

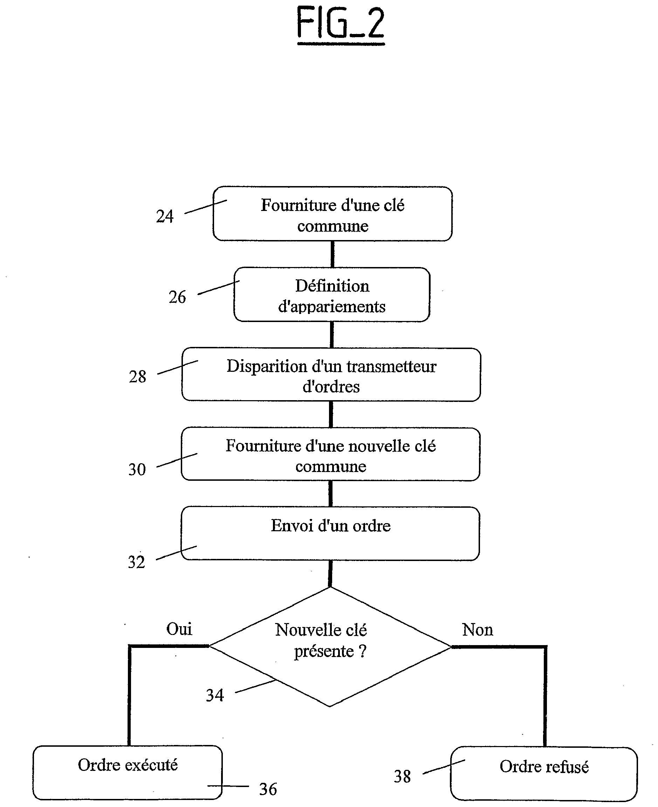

La structure physique et logique d'un objet bidirectionnel utilisable dans une telle installation est connue de l'homme du métier; on peut notamment se référer à la description donnée en référence à la figure 2 de la demande de brevet français 02 01631 du 11.02.02. En résumé, un objet bidirectionnel comprend un étage de réception, apte à recevoir des signaux depuis les autres objets ou certains d'entre eux, un étage d'émission apte à émettre des signaux vers les autres objets ou certains d'entre eux et une unité logique pilotant l'étage de réception et l'étage d'émission. L'objet comprend aussi une mémoire, contenant les programmes mis en œuvre dans l'unité logique et notamment les programmes d'exploitation de l'objet. Comme expliqué plus bas, la mémoire de l'objet peut aussi contenir au moins une clé commune; l'objet peut aussi contenir des informations d'appariement, par exemple des identifiants d'autres objets stockés dans la mémoire. Selon leur utilisation comme transmetteur d'ordres ou comme émetteur d'ordres, les objets peuvent présenter des entrées (boutons, micro-commutateurs, commutateurs) ou des sorties (vers un opérateur) différentes; le programme d'exploitation peut aussi différer selon les fonctions auxquelles un objet est destiné.

Le problème que résout l'invention est celui de la reprogrammation des objets bidirectionnels, qui se pose lorsque l'on souhaite exclure un objet d'un ensemble d'objets appariés. Ce problème se pose notamment en cas de perte ou du vol d'un objet. Ce problème se pose aussi si l'on souhaite remplacer un objet par un autre, par exemple remplacer un ancien transmetteur par un nouveau transmetteur. Dans l'exemple proposé, en cas de disparition de l'objet 16, il serait utile de pouvoir remplacer cet objet par un nouveau transmetteur d'ordres, sans pour autant devoir reprogrammer les quatre autres appariements.

La figure 2 montre un ordinogramme des étapes du procédé de l'invention. Les étapes 24 et 26 sont des étapes de fourniture d'une clé commune aux objets et d'appariement entre les objets; ces étapes ne font pas à proprement parler partir du procédé et peuvent être effectuées selon toute méthode souhaitée. Leur chronologie peut être inversée, l'étape d'appariements précédant celle de fourniture d'une clé commune. A l'issue de ces étapes, une clé commune est fournie à l'ensemble des objets qui doivent ultérieurement participer à la reprogrammation. Dans le cas le plus simple, il s'agit de l'ensemble des objets de l'installation; on peut imaginer que les appariements sont définis à l'intérieur de deux sous groupes distincts et qu'une clé commune est affectée à chacun des sous-groupes. Pour fournir cette clé commune, on peut notamment utiliser le procédé décrit dans la demande de brevet EP 1 085 481 ou encore dans la demande de brevet français 02 01631 du 11.02.02. Quelle que soit la méthode utilisée, à l'issue de l'étape de fourniture, les objets bidirectionnels pouvant ultérieurement participer à la reprogrammation disposent chacun d'une clé commune. Cette clé commune est par exemple une suite de chiffres stockée dans une mémoire associée à chacun des objets.

L'étape 28 correspond à la disparition d'un transmetteur d'ordre - qui n'est qu'un exemple de circonstance dans laquelle on peut souhaiter reprogrammer les objets. On considère une disparition du transmetteur d'ordre 16.

A l'étape 30, une nouvelle clé commune est fournie aux objets de l'installation - sauf à l'objet à exclure. Diverses solutions pour fournir cette nouvelle clé commune sont détaillées dans la suite. A l'issue de cette étape, les objets à reprogrammer - à l'exception de l'objet à exclure - disposent de la nouvelle clé commune. Comme expliqué plus bas, en fonction de la nature de la procédure d'authentification, la nouvelle clé commune peut être fournie sous des formes différentes aux différents objets.

A l'étape 32, un objet tente d'établir une communication avec un autre objet avec lequel il est apparié, pour lui transmettre un ordre. Dans l'exemple, un transmetteur d'ordre est utilisé pour transmettre un ordre vers un récepteur d'ordres.

A l'étape 34, pour la paire d'objets affectés par la tentative de transmission d'un ordre, on vérifie si les deux objets disposent de la nouvelle clé commune. Si tel est le cas, on passe à l'étape 36 et sinon on passe à l'étape 38. La vérification peut s'effectuer suivant toute procédure d'authentification permettant à chaque objet de vérifier que l'autre dispose de la nouvelle clé. On peut notamment utiliser les algorithmes d'authentification du genre décrit dans US-A-5 841 866. On peut aussi n'exiger la connaissance de la nouvelle clé commune que de la part de certains des objets : ainsi, dans une installation, on peut supposer que des récepteurs d'ordres fixes - tels des moteurs de volets roulants - ne risquent pas d'être perdus ou dérobés. De ce fait, il peut suffire lors d'une tentative d'envoi d'un ordre depuis un transmetteur d'ordres vers un récepteur d'ordres de vérifier que le transmetteur d'ordres dispose de la nouvelle clé commune. En pratique la vérification impose de fournir la nouvelle clé commune, sous une forme ou une autre, au récepteur d'ordres.

A l'étape 36, il est avéré que les deux objets disposent de la nouvelle clé commune - autrement dit qu'ils ne sont pas exclus. L'ordre est donc accepté, i.e. exécuté par son destinataire. Tel est le cas, dans l'exemple, si les transmetteurs d'ordres 18 ou 20 sont utilisés. L'utilisateur peut donc continuer à se servir des transmetteurs d'ordres, comme auparavant. Il n'est pas nécessaire qu'il reprogramme tous les appariements.

A l'étape 38, il est avéré que les objets ne disposent pas tous les deux de la nouvelle clé commune. L'ordre est refusé - le destinataire de l'ordre ne l'exécute donc pas. Dans l'exemple, le transmetteur d'ordre 16, qui n'a pas reçu la nouvelle clé commune, ne peut pas commander un des deux récepteurs d'ordres 4 ou 10 auxquels il était apparié.

Ceci assure que l'objet exclu ne peut plus être utilisé dans l'installation, sans que tous les appariements ne doivent être reprogrammés.

Les étapes 34, 36 et 38 sont mises en œuvre pour les différents appariements considérés; elles peuvent être mises en œuvre successivement, à chaque occurrence d'utilisation d'un objet. Elles peuvent aussi être mises en œuvre quasiment simultanément : tel pourrait être le cas si un objet tente d'envoyer un ordre simultanément vers une pluralité d'autres objets. Dans l'exemple proposé plus haut, lorsque l'objet 20 est utilisé pour la première fois après la fourniture d'une nouvelle clé commune, il émet une commande vers les objets 4, 10 et 14; ainsi, la vérification de l'étape 34 s'effectue à trois reprises, sur chaque paire d'objets. On pourrait aussi imaginer un envoi par l'objet 20 d'une trame de validation commune, par laquelle l'objet 20 signale la connaissance qu'il a de la clé commune.

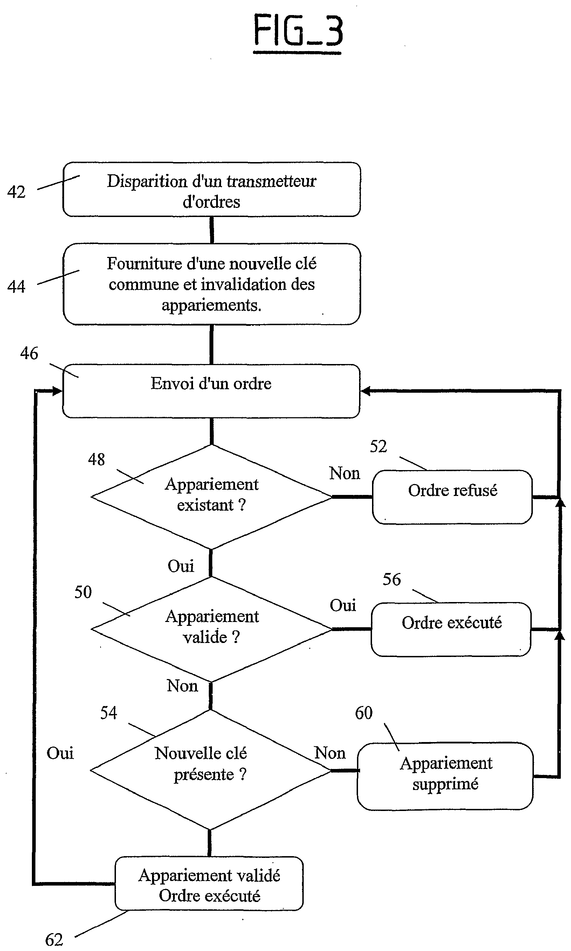

La figure 3 montre un ordinogramme d'un mode de réalisation plus élaboré de l'invention. Dans l'exemple de la figure 3, la vérification prévue à la figure 2 à l'étape 34 de la figure 2 n'est mise en œuvre, pour une paire d'objets donnée, que lors de la première tentative d'envoi d'un ordre d'un objet à l'autre.

Dans l'exemple de la figure 3, les appariements sont réalisés par le stockage dans un objet d'identifiants de l'ensemble des objets avec lesquels il est apparié. Ainsi, dans l'exemple, le transmetteur d'ordres 16 stocke des identifiants des récepteurs d'ordres 4 et 10, tandis que le récepteur d'ordres 10 stocke les identifiants des transmetteurs d'ordres 16, 18 et 20. En outre, un marqueur est prévu pour chaque identifiant stocké; le marqueur est binaire et sa fonction apparaît de la description qui suit. En fonctionnement "normal" de l'installation, le marqueur présente une première valeur - la valeur nulle dans l'exemple.

On suppose, comme à la figure 2, des objets disposant d'une clé commune et entre lesquels des appariements sont définis. A l'étape 42 un transmetteur d'ordre disparaît. Une nouvelle clé commune est fournie à l'étape 44. Dans chaque objet ayant reçu la nouvelle clé commune, le marqueur associé à chaque identifiant change de valeur; il est passé à la valeur 1. Cette valeur dénote que l'appariement en cause est invalidé, de façon temporaire.

A l'étape 46, un objet envoie un ordre vers un autre objet.

A l'étape 48, dans l'objet destinataire de l'ordre, on procède à la vérification de l'existence d'un appariement. Si l'appariement existe, on passe à l'étape 50 et sinon à l'étape 52.

A l'étape 52, dans l'objet destinataire, l'ordre est refusé si l'appariement n'existe pas. Ceci est une application normale des règles de fonctionnement des objets.

A l'étape 50, on teste dans l'objet ayant reçu l'appariement si le marqueur correspondant est valide - à l'état "0" dans l'exemple. Si c'est le cas, on passe à l'étape 56 et sinon à l'étape 54.

A l'étape 56, l'ordre est exécuté.

A l'étape 54, on teste si la nouvelle clé est présente, dans l'objet émetteur et dans l'objet destinataire de l'ordre. Si c'est le cas, on passe à l'étape 62 et sinon à l'étape 60.

A l'étape 60, l'appariement est supprimé dans les deux objets. L'appariement est donc définitivement invalidé; dans le mode de mise en œuvre le plus simple, les mémoires de chacun des objets de la paire stockant l'identifiant de l'autre objet de la paire sont effacées. Ceci assure que l'objet exclu ne peut plus être utilisé dans l'installation. On peut prévoir des solutions plus complexes, par exemple avertir l'utilisateur par un signal particulier ou provoquer une inactivation complète des objets. On peut aussi ne supprimer l'appariement qu'après une deuxième tentative, ce qui laisse à l'utilisateur la possibilité de transmettre la nouvelle clé commune à l'objet qui en est dépourvu.

A l'étape 62, l'ordre est exécuté et le marqueur de l'identifiant de l'autre objet est passé à la valeur "0" dans les deux objets. L'appariement est à nouveau "validé" ou "restauré".

Après les étapes 52, 56, 60 et 62, on repasse à l'étape 46.

L'ordinogramme de la figure 3 est parcourue comme expliqué maintenant. On considère l'exemple visé plus haut. Après la fourniture de la nouvelle clé commune, les objets 4, 10, 14, 18 et 20 ont reçu la nouvelle clé commune et ont passé les marqueurs de tous leurs objets appariés à "0", invalidant ainsi tous les appariements.

On suppose que l'objet 18 envoie un ordre à l'objet 10. L'ordinogramme est parcouru suivant les étapes 48, 50, 54. A l'étape 54, les deux objets disposent de la clé commune et on passe à l'étape 62 : les marqueurs de l'identifiant de l'objet 10 dans l'objet 18 et de l'identifiant de l'objet 18 dans l'objet 10 passent à "0". Si l'objet 18 envoie un nouvel ordre à l'objet 10, l'ordinogramme est parcouru suivant les étapes 48, 50, 56. La présence du marqueur permet de ne tester qu'une fois la présence de la nouvelle clé commune, ce qui simplifie les échanges.

On suppose que l'objet 16 est utilisé pour transmettre un ordre vers les objets 4 et 10. Pour chaque appariement, on parcourt l'ordinogramme suivant les étapes 48, 50, 54. A l'étape 54, l'objet 16 ne présente pas la nouvelle clé commune. De ce fait, à l'étape 60, l'appariement est supprimé. Ainsi, les identifiants des objets 4 et 10 sont supprimés dans l'objet 16 et l'identifiant de l'objet 16 est supprimé dans les objets 4 et 10. Ceci évite qu'une tentative ultérieure d'utilisation de l'objet 16 ne soit couronnée de succès - elle conduirait à parcourir l'ordinogramme suivant les étapes 48 et 52. Ceci permet aussi de libérer un emplacement mémoire dans les objets pour permettre d'autres appariements.

La solution de la figure 3 permet, lors d'un deuxième ordre, de ne pas vérifier à nouveau la présence de la clé commune; un ordre ultérieur peut donc être exécuté sans vérification de l'existence de la clé commune. Elle permet en outre de déterminer, pour un objet donné, à quel moment l'ensemble des objets auquel cet objet donné est relié a été balayé : de fait, lorsque tous les marqueurs sont repassés à "0", tous les appariements ont été "restaurés".

Dans un autre mode de réalisation, on peut prévoir que la vérification n'est réalisée que pendant une période de temps prédéterminée suivant la fourniture d'une nouvelle clé commune; ce mode de mise en œuvre assure une plus grande sécurité, en éliminant les objets qui ne sont pas ou rarement utilisés. Dans ce cas, à l'issue de la période de temps prédéterminée, on élimine les identifiants des objets pour lesquels le marqueur est encore à "1".

Les étapes 48 à 62 sont mises en œuvre pour les différents appariements considérés; elles peuvent être mises en œuvre successivement, à chaque occurrence d'utilisation d'un objet. Elles peuvent aussi être mises en œuvre quasiment simultanément : tel pourrait être le cas si un objet envoie un ordre simultanément vers une pluralité d'autres objets. Dans l'exemple proposé plus haut, lorsque l'objet 20 est utilisé pour la première fois après la fourniture d'une nouvelle clé commune, il émet une commande vers les objets 4, 8 et 12; ainsi, les étapes 48, 50, 54 et 62 s'effectuent à trois reprises, sur chaque paire d'objets. On pourrait aussi imaginer un envoi par l'objet 20 d'une trame de validation commune, par laquelle l'objet 20 signale la connaissance qu'il a de la clé commune.

Il faut enfin noter que dans les exemples cités, chaque appariement est réalisé par le stockage dans un objet d'identifiants de l'ensemble des objets avec lesquels il est apparié. Comme il est décrit dans l'état de la technique, l'appariement peut être plus simplement réalisé par un stockage partiel : par exemple celui de l'identifiant d'un transmetteur d'ordre dans un récepteur d'ordre, sans que l'identifiant du récepteur d'ordre ne soit stocké dans le transmetteur d'ordre, ou encore par le stockage dans un transmetteur d'ordre d'un des identifiants ou adresses du récepteur d'ordre, sans que ledit récepteur d'ordre ne contienne l'identifiant du transmetteur d'ordre. Il reste que dans chaque cas, le récepteur d'ordre a la possibilité d'invalider l'appariement, ou encore de le supprimer, comme expliqué précédemment.

Diverses solutions permettent de fournir une clé commune à un ensemble d'objets, comme décrit maintenant. Dans une première variante, la fourniture de la nouvelle clé commune est effectuée à l'aide d'un seul des points de télécommande, nomade ou fixe. Une commande clavier particulière, ou combinaison de touches, permet de faire entrer cette télécommande dans un mode où elle génère une nouvelle clé NK, par exemple à l'aide d'un algorithme pseudo-aléatoire, ou encore par tout autre moyen, cela étant sans incidence sur le contenu de l'invention. On notera que l'ancienne clé commune OK peut être conservée en mémoire par la télécommande, pour les raisons expliquées ci-dessous. Cette variante présente l'avantage de la simplicité et de la facilité de mise en œuvre.

Dans une seconde variante préférée, deux points de commande au moins sont nécessaires pour permettre le changement de clé commune de l'un d'entre eux. Ainsi, si on désire effectuer un changement de clé commune à l'aide de la télécommande T1, on engage la procédure clavier de la première variante, mais cela a pour effet de provoquer l'émission par T1 d'une demande d'authentification particulière. Dans la trame d'émission, T1 envoie un signe prouvant qu'elle contient l'ancienne clé commune - ce peut être en clair la valeur de cette clé commune, ou toute autre valeur cryptée dérivée de cette clé commune.

A réception d'une telle demande d'authentification ET en réponse à au moins une commande clavier de l'utilisateur, une autre télécommande T2 adressera à T1 un signal d'acquisition pour autant que T2 ait bien vérifié que l'ancienne clé commune transmise par T1 était bien celle connue de T2. C'est seulement à réception d'un tel signal d'acquisition que la télécommande T1 est susceptible de modifier sa propre clé commune en créant NK tout en conservant l'ancienne valeur OK en mémoire. Pour augmenter la sécurité correspondant à ce procédé, on peut imposer que le signal d'acquisition soit émis dans une plage temporelle courte suivant l'émission du signal particulier de demande d'authentification.

Dans cette seconde variante, deux points de commande au moins sont nécessaires pour générer une nouvelle clé commune, ce qui réduit les possibilités d'un usage frauduleux. Ainsi, il n'est pas possible de changer la clé commune simplement à partir d'un actionneur égaré.

Après cette première étape, un des objets - une télécommande dans l'exemple - dispose de la nouvelle clé. Il convient ensuite de diffuser la nouvelle clé NK vers les autres points de commande.

Selon une première variante, cette diffusion a lieu de manière sensiblement collective, i. e. point à multipoints; selon une deuxième variante, cette diffusion a lieu par succession de diffusions point à point. Dans la première variante, l'objet qui contient la nouvelle clé adresse, en réponse à une commande clavier particulière de l'utilisateur, ou directement après la génération de la nouvelle clé, un message de demande de changement de clé à l'ensemble des objets; le message contient simultanément l'ancienne clé OK et la nouvelle NK. Tout objet recevant ce message, éventuellement répété dans une plage temporelle de quelques minutes, procède à la modification de sa propre clé commune actuelle en nouvelle clé NK, après avoir vérifié l'identité de sa clé actuelle avec l'ancienne clé OK. La vérification de l'ancienne clé évite qu'un objet d'une installation voisine ne change sa clé en recevant le message avec la nouvelle clé. Cette première variante exploite les capacités des objets à transmettre et recevoir; elle présente l'avantage de la simplicité - puisqu'il n'est nécessaire pour l'utilisateur de ne disposer que d'un objet pour provoquer la fourniture de la nouvelle clé à tous les objets de l'installation.

Une autre forme de cette première variante dite collective consiste à ce que l'objet disposant de la nouvelle clé envoie simplement un ordre de changement de clé accompagné de la nouvelle clé NK. Chaque objet recevant l'ordre général de demande de changement de clé engageant alors un dialogue d'authentification avec l'objet disposant de la nouvelle clé, et n'acceptant la nouvelle clé NK que si ce dialogue prouve que l'objet disposant de la nouvelle clé contient l'ancienne clé commune OK. Ceci évite, comme dans la forme précédente, qu'un objet d'une installation ne réagisse à une commande de changement de clé provenant d'un objet d'une autre installation.

Dans la deuxième variante, la nouvelle clé est transmise d'objet en objet, avec au moins une opération de l'utilisateur lors de chaque transmission. La transmission de la nouvelle clé commune s'accompagne de la transmission de l'ancienne clé commune, ou bien conduit à un dialogue prouvant à l'objet recevant la nouvelle clé que l'objet qui transmet la nouvelle clé commune possédait aussi l'ancienne. Le fait de prévoir une opération de l'utilisateur lors de chaque transmission sécurise la fourniture de la nouvelle clé. Ainsi, même si l'objet à expulser se trouve encore à portée radio - par exemple par ce qu'il est simplement perdu dans la maison - il n'est pas pourvu de la nouvelle clé. Ceci améliore la sécurité, puisque la présence d'un objet à exclure à portée radio des autres objets permet néanmoins de l'exclure. Ceci évite qu'un objet ne soit ensuite ramassé par un passant qui en ferait un usage frauduleux. De plus, cette dernière variante s'accommode d'un mode basse consommation des points de commande, qui ne confère à ceux-ci un fonctionnement en réception que lors d'une activation manuelle. Il est aussi possible dans cette deuxième variante d'imposer l'utilisation de deux objets pour générer la nouvelle clé.

Ces deux variantes peuvent être mises en œuvre pour l'ensemble des objets; il est toutefois avantageux de ne les utiliser que pour diffuser la nouvelle clé vers les objets directionnels utilisés comme points de commande. En effet, les points de commande sont facilement accessibles par l'utilisateur, ce qui rend la deuxième variante facile à mettre en œuvre. En revanche, il peut être compliqué pour l'utilisateur d'accéder à chaque opérateur ou récepteur pour une commande manuelle. On pourrait aussi ne mettre en œuvre ces variantes que pour les télécommandes nomades, i.e. pour les points de commande qui ne sont pas fixes : on peut en effet partir du principe que les points de commande fixes ne peuvent normalement pas disparaître.

Si l'une ou l'autre de ces variantes n'est mise en œuvre que pour les points de commande - ou pour un sous-ensemble d'entre eux - la nouvelle clé peut ensuite être diffusée vers les autres objets comme expliqué maintenant. La diffusion de la nouvelle clé vers les actionneurs est d'abord réalisable selon les modalités indiquées dans la demande de brevet 02 01631 du 11.02.02. Dans cette demande, il est proposé d'appliquer à plusieurs objets de façon synchrone un événement initiateur, comme une double coupure de l'alimentation. On envoie ensuite - par exemple par l'un des objets ayant subi l'événement initiateur - un message contenant un identifiant de groupe. Un objet ayant subi l'événement initiateur et recevant ce message stocke l'identifiant de groupe, et considère ensuite qu'il fait partie du groupe défini par cet identifiant. L'instant d'application de l'événement initiateur peut servir dans chaque objet de référence temporelle pour sécuriser la définition du groupe.

Pour diffuser la nouvelle clé, l'événement initiateur peut être constitué par un ordre collectif particulier de la télécommande disposant déjà de la nouvelle clé; l'événement initiateur peut aussi être constitué par une action spécifique sur une ligne d'alimentation commune aux actionneurs, suivie le cas échéant de la réception d'une nouvelle clé. Dans la mesure où les actionneurs ou les points de commande fixes sont identifiés comme tels - par exemple à l'installation ou en usine - il reste sûr d'envoyer la nouvelle clé, le cas échéant accompagnée de l'ancienne clé, vers les actionneurs et/ou les points de commande : en effet, une telle commande peut n'être acceptée que par des objets identifiés comme fixes et ne serait pas acceptée par un point de commande mobile perdu. Cette solution s'applique encore au remplacement d'un objet fixe : il suffirait que l'objet fixe à remplacer ne subisse pas l'événement initiateur. On peut simplement, dans le cas d'un point de commande fixe enlever l'alimentation par pile; pour un actionneur ou un point de commande relié au réseau, on peut débrancher le point de commande.

Du point de vue d'un objet, le procédé décrit ci-dessus implique simplement de recevoir une nouvelle clé, de vérifier lors de l'envoi ultérieur d'un ordre- en émission ou en réception - que l'objet destinataire ou émetteur dispose de la même nouvelle clé et de d'invalider l'appariement si l'appariement existait précédemment et si la vérification est négative. Un programme d'exploitation d'un objet comprend donc des routines adaptées à la mise en œuvre de chaque étape du procédé.

On ne détaille pas la mise en œuvre par programmation des différentes étapes proposées : celle-ci est à la portée de l'homme du métier utilisant les techniques de programmation connues en tant que telles, à partir des indications fournies dans la description qui précède.

Le procédé décrit ci-dessus présente les avantages suivants : en cas de perte ou vol d'un objet - une télécommande par exemple - il est inutile de procéder à une complète procédure de ré-appariements pour rétablir tous les appariements entre télécommandes valides et actionneurs : ces appariements individuels sont simplement suspendus par la procédure de changement de clé commune et redeviennent valides sur simple constat d'accord avec la nouvelle clé commune; pour l'utilisateur, il est uniquement nécessaire de déclencher la fourniture d'une nouvelle clé, les autres étapes étant indétectables et ne nécessitant pas d'intervention de l'utilisateur.

Même dans le cas où l'on impose à l'utilisateur de valider sur chaque point de commande la transmission de la nouvelle clé, le procédé conserve les appariements. Le nombre d'actions est donc uniquement fonction du nombre de points de commande et non pas du nombre d'appariements. Dans l'exemple proposé plus haut, si la télécommande 16 disparaît, il suffit de valider la transmission de la nouvelle clé aux télécommandes 18 et 20, sans devoir établir à nouveau les appariements (12, 18), (4, 20), (8, 20) et (12, 20).

Du point de vue de la sécurité, l'exemple de la figure 3 permet de procéder à la fourniture de la clé commune avec des contraintes de sécurité beaucoup plus faibles que pour l'appariement. En effet, il n'est pas gênant que la nouvelle clé commune soit aussi fournie par erreur à des transmetteurs d'ordres non appariés : ces transmetteurs d'ordres ne sont pas appariés et ne peuvent donc utiliser cette clé commune. Ceci ressort clairement de l'ordinogramme de la figure 3, puisqu'un ordre transmis par un transmetteur non apparié est refusé (étape 48, 52).

Un autre avantage est que la clé commune peut être fourni globalement à tous les transmetteurs d'une installation, sans considération des appariements.

Bien entendu, l'invention n'est pas limitée aux modes de réalisation donnés plus haut. La transmission radio utilisée entre un transmetteur et un récepteur n'est donnée qu'à titre d'exemple et peut être modifiée. L'invention s'applique notamment, que les transmetteurs et les récepteurs utilisent une fréquence unique ou émettent chacun sur une fréquence distincte, ou par sauts de fréquences, ou avec des modulations différentes. On pourrait aussi utiliser des supports de transmission distincts dans le sens transmetteur vers récepteur ou dans le sens récepteur vers transmetteur, ou encore des supports de transmission distincts pour des groupes de transmetteurs ou d'émetteurs distincts. En fait, le procédé s'applique dès lors que les transmetteurs ou récepteurs d'ordres sont des "objets bidirectionnels" capables d'émettre et de recevoir.

On a utilisé les mots "récepteurs d'ordres" et "opérateurs", qui s'appliquent notamment à l'exemple des opérateurs de volets roulants. Le récepteur et l'opérateur peuvent être des éléments distincts, comme dans les exemples, ou alors former un ensemble unique - par exemple par intégration du récepteur d'ordres dans l'opérateur.

On peut manifestement coder ou encrypter les messages ou les identifiants, en utilisant les techniques connues de l'état de la technique.

## Revendications

1. Un procédé de reprogrammation d'un ensemble d'objets bidirectionnels (4, 10, 14, 16, 18, 20) d'une installation notamment domotique, les objets de l'installation présentant des capacités d'émission et de réception sans fil et contenant une clé commune, au moins deux objets de l'installation étant appariés pour permettre l'envoi d'un ordre depuis un objet (16, 18, 20) de la paire vers l'autre objet de la paire (4, 10, 14) et l'exécution de l'ordre par l'autre objet (4, 10, 14), le procédé de reprogrammation comprenant les étapes de :
• fourniture (30) aux objets de l'installation d'une nouvelle clé commune à l'exception d'un l'objet à exclure, l'étape de fourniture comprenant la génération de la nouvelle clé commune et la diffusion de la nouvelle clé commune générée, l'étape de diffusion comprenant, lors de la diffusion de la nouvelle clé commune d'un objet vers un autre objet, la vérification que les deux objets contiennent l'ancienne clé commune ; puis
• lors de l'envoi (32) d'un ordre d'un objet vers un autre objet qui lui est apparié, vérification (34) que les deux objets contiennent la nouvelle clé commune, et
• refus (38) d'exécution de l'ordre par l'autre objet si les deux objets ne contiennent pas la nouvelle clé commune, ledit procédé étant characterisé par:
• tel que la fourniture (30) aux objets de l'installation d'une nouvelle clé commune à l'exception de l'objet à exclure, comprend la diffusion depuis un objet de la paire à l'autre objet de la paire d'une valeur cryptée dérivée de l'ancienne clé commune.

2. Le procédé de la revendication 1, **caractérisé en ce que** l'étape de vérification (34) n'est mise en œuvre, pour deux objets donnés, que lors du premier ordre suivant la fourniture de la nouvelle clé commune.

3. Le procédé de la revendication 1 ou 2, **caractérisé en ce que** l'étape de génération s'effectue à partir d'un objet unique.

4. Le procédé de la revendication 1 ou 2, **caractérisé en ce que** l'étape de génération s'effectue à partir de deux objets.

5. Le procédé de l'une des revendications 1 à 4, **caractérisé en ce que** l'étape de diffusion comprend une diffusion point à multipoints.

6. Le procédé de l'une des revendications 1 à 5, **caractérisé en ce que** l'étape de diffusion comprend une diffusion point à point.

7. Le procédé de la revendication 6, **caractérisé en ce que** la diffusion point a point comprend une action de l'utilisateur sur chaque point.

8. Le procédé de l'une des revendications 1 à 4, **caractérisé en ce que** l'étape de diffusion comprend :
• une diffusion point à point parmi un sous-ensemble des objets ;
• une diffusion point à multipoint vers un autre sous-ensemble des objets.

9. Un programme d'exploitation d'un objet bidirectionnel (4, 10, 14) mis en œuvre par l'objet bidirectionnel (4, 10, 14), agissant comme récepteur d'ordre et présentant des capacités d'émission et de réception sans fil, adapté à stocker au moins une clé commune et au moins une information d'appariement, comprenant :
a) une routine de génération d'une nouvelle clé commune ;
b) une routine de transmission vers un autre objet d'une nouvelle clé commune, comprenant la vérification que les deux objets contiennent l'ancienne clé commune ;
c) une routine de réception d'une nouvelle clé commune ;
c) une routine de réception d'un ordre ;
d) une routine de vérification pour un ordre reçu depuis un objet émetteur apparié de la présence de la clé commune dans l'objet émetteur, et
e) une routine de refus d'exécution de l'ordre si la vérification est négative
ledit programme étant characterisé par le fait que la vérification que les deux objets contiennent l'ancienne clé commune comprend la diffusion d'une valeur cryptée dérivée de l'ancienne clé commune.

10. Le programme de la revendication 9, **caractérisé en ce que** la routine de vérification n'est mise en œuvre, pour un appariement donné, que lors du premier ordre reçu.

11. Un programme d'exploitation d'un objet bidirectionnel (16, 18, 20) mis en œuvre par l'objet bidirectionnel (16, 18, 20), agissant comme transmetteur d'ordre et présentant des capacités d'émission et de réception sans fil, adapté à stocker au moins une clé commune et au moins une information d'appariement, comprenant :
a) une routine de génération d'une nouvelle clé commune ;
b) une routine de transmission vers un autre objet d'une nouvelle clé commune, comprenant la vérification que les deux objets contiennent l'ancienne clé commune ;
c) une routine de réception d'une nouvelle clé commune ;
d) une routine d'émission d'un ordre vers un objet destinataire apparié ;
e) une routine de vérification de la présence de la clé commune dans l'objet destinataire
ledit programme étant characterisé par le fait que la vérification que les deux objets contiennent l'ancienne clé commune comprend la diffusion d'une valeur cryptée dérivée de l'ancienne clé commune.

12. Le programme de la revendication 12, **caractérisé en ce que** la routine de vérification n'est mise en œuvre, pour un appariement donné, que lors du premier ordre émis.

13. Le programme de l'une des revendications 9 à 12, **caractérisé en ce que** la routine de génération comprend une sous-routine d'émission d'une commande de génération de la clé commune vers un autre objet.

14. Le programme de l'une des revendications 9 à 13, **caractérisé en ce qu'**il comprend en outre une routine de transmission vers plusieurs autres objets d'une nouvelle clé commune.

15. Un objet bidirectionnel, présentant :
• un étage de réception sans fil ;
• un étage d'émission sans fil ;
• une unité logique pilotant l'étage de réception et l'étage d'émission, et
• une mémoire contenant un programme selon une des revendications 9 à 14.

## Patentansprüche

1. Verfahren zum Umprogrammieren eines Satzes von bidirektionalen Objekten (4, 10, 14, 16, 18, 20) einer Anlage, insbesondere einer Hausautomatisierungsanlage, wobei die Objekte der Anlage drahtlose Sende- und Empfangsmöglichkeiten haben und einen gemeinsamen Schlüssel enthalten, mindestens zwei Objekte der Anlage gepaart werden, um das Senden eines Befehls von einem Objekt (16, 18, 20) des Paares an das andere Objekt des Paares (4, 10, 14) und die Ausführung des Befehls durch das andere Objekt (4, 10, 14) zu ermöglichen, wobei das Verfahren zum Umprogrammieren die folgenden Schritte umfasst:
• Bereitstellen (30) eines neuen gemeinsamen Schlüssels für die Objekte der Anlage mit Ausnahme eines auszuschließenden Objekts, wobei der Bereitstellungsschritt das Erzeugen des neuen gemeinsamen Schlüssels und das Verbreiten des erzeugten neuen gemeinsamen Schlüssels umfasst, wobei der Verbreitungsschritt beim Verbreiten des neuen gemeinsamen Schlüssels von einem Objekt zu einem anderen Objekt das Überprüfen umfasst, dass beide Objekte den alten gemeinsamen Schlüssel enthalten; dann
• beim Senden (32) eines Befehls von einem Objekt an ein anderes damit gepaartes Objekt, Überprüfen (34), dass beide Objekte den neuen gemeinsamen Schlüssel enthalten, und
• Verweigern (38) der Ausführung des Befehls durch das andere Objekt, wenn die beiden Objekte nicht den neuen gemeinsamen Schlüssel enthalten, wobei das Verfahren **gekennzeichnet ist durch**:
• beispielsweise das Bereitstellen (30) eines neuen gemeinsamen Schlüssels für die Objekte der Anlage, mit Ausnahme des auszuschließenden Objekts, die Verbreitung eines verschlüsselten Wertes, der aus dem alten gemeinsamen Schlüssel abgeleitet ist, von einem Objekt des Paares auf das andere Objekt des Paares umfasst.

2. Verfahren nach Anspruch 1, **dadurch gekennzeichnet, dass** der Überprüfungsschritt (34) für zwei gegebene Objekte nur bei dem ersten Befehl nach dem Bereitstellen des neuen gemeinsamen Schlüssels ausgeführt wird.

3. Verfahren nach Anspruch 1 oder 2, **dadurch gekennzeichnet, dass** der Erzeugungsschritt von einem einzigen Objekt aus durchgeführt wird.

4. Verfahren nach Anspruch 1 oder 2, **dadurch gekennzeichnet, dass** der Erzeugungsschritt von zwei Objekten aus durchgeführt wird.

5. Verfahren nach einem der Ansprüche 1 bis 4, **dadurch gekennzeichnet, dass** der Verbreitungsschritt eine Punkt-zu-Mehrpunkt-Verbreitung umfasst.

6. Verfahren nach einem der Ansprüche 1 bis 5, **dadurch gekennzeichnet, dass** der Verbreitungsschritt eine Punkt-zu-Punkt-Verbreitung umfasst.

7. Verfahren nach Anspruch 6, **dadurch gekennzeichnet, dass** die Punkt-zu-Punkt-Verbreitung eine Benutzeraktion an jedem Punkt umfasst.

8. Verfahren nach einem der Ansprüche 1 bis 4, **dadurch gekennzeichnet, dass** der Verbreitungsschritt Folgendes umfasst:
• eine Punkt-zu-Punkt-Verbreitung aus einer Teilmenge der Objekte;
• eine Punkt-zu-Mehrpunkt-Verbreitung zu einer anderen Teilmenge der Objekte.

9. Programm zum Betreiben eines bidirektionalen Objekts (4, 10, 14), das von dem bidirektionalen Objekt (4, 10, 14) ausgeführt wird, als Befehlsempfänger fungiert und drahtlose Sende- und Empfangsmöglichkeiten aufweist, das zum Speichern mindestens eines gemeinsamen Schlüssels und mindestens einer Paarungsinformation geeignet ist, mit:
a) einer Vorgehensweise zur Erzeugung eines neuen gemeinsamen Schlüssels;
b) einer Vorgehensweise zur Übertragung eines neuen gemeinsamen Schlüssels an ein anderes Objekt, einschließlich der Überprüfung, ob beide Objekte den alten gemeinsamen Schlüssel enthalten;
c) einer Vorgehensweise zum Empfang eines neuen gemeinsamen Schlüssels;
c) einer Vorgehensweise zum Empfang eines Befehls;
d) einer Vorgehensweise zum Überprüfen eines Befehls, der von einem gepaarten Senderobjekt empfangen wurde, auf das Vorkommen des gemeinsamen Schlüssels im Senderobjekt, und
e) einer Vorgehensweise zur Verweigerung der Ausführung des Befehls, wenn die Überprüfung negativ ausfällt,
wobei das Programm **dadurch gekennzeichnet ist, dass** die Überprüfung, dass die beiden Objekte den alten gemeinsamen Schlüssel enthalten, die Verbreitung eines verschlüsselten Wertes umfasst, der von dem alten gemeinsamen Schlüssel abgeleitet ist.

10. Programm nach Anspruch 9, **dadurch gekennzeichnet, dass** die Vorgehensweise zum Überprüfen einer bestimmten Paarung nur bei dem ersten erhaltenen Befehl durchgeführt wird.

11. Programm zum Betreiben eines bidirektionalen Objekts (16, 18, 20), das von dem bidirektionalen Objekt (16, 18, 20) ausgeführt wird, als Befehlssender fungiert und drahtlose Sende- und Empfangsfähigkeiten aufweist, und das dazu geeignet ist, mindestens einen gemeinsamen Schlüssel und mindestens eine Paarungsinformation zu speichern, mit:
a) einer Vorgehensweise zur Erzeugung eines neuen gemeinsamen Schlüssels;
b) einer Vorgehensweise zur Übertragung eines neuen gemeinsamen Schlüssels an ein anderes Objekt, einschließlich der Überprüfung, ob beide Objekte den alten gemeinsamen Schlüssel enthalten;
c) einer Vorgehensweise zum Empfang eines neuen gemeinsamen Schlüssels;
d) einer Vorgehensweise zum Senden eines Befehls an ein gepaartes Zielobjekt;
e) einer Vorgehensweise zum Überprüfen des Vorkommens des gemeinsamen Schlüssels im Zielobjekt,
wobei das Programm **dadurch gekennzeichnet ist, dass** die Überprüfung, dass die beiden Objekte den alten gemeinsamen Schlüssel enthalten, die Verbreitung eines verschlüsselten Wertes umfasst, der vom alten gemeinsamen Schlüssel abgeleitet ist.

12. Programm nach Anspruch 12, **dadurch gekennzeichnet, dass** die Vorgehensweise zum Überprüfen einer bestimmten Paarung nur bei dem ersten gesendeten Befehl ausgeführt wird.

13. Programm nach einem der Ansprüche 9 bis 12, **dadurch gekennzeichnet, dass** die Vorgehensweise des Erzeugens eine untergeordnete Vorgehensweise zum Senden eines Befehls für das Erzeugen des gemeinsamen Schlüssels an ein anderes Objekt umfasst.

14. Programm nach einem der Ansprüche 9 bis 13, **dadurch gekennzeichnet, dass** es ferner eine Vorgehensweise zur Übertragung eines neuen gemeinsamen Schlüssels an mehrere andere Objekte umfasst.

15. Bidirektionales Objekt, das Folgendes aufweist:
• eine Stufe des drahtlosen Empfangs;
• eine Stufe des drahtlosen Sendens;
• eine logische Einheit, die die Empfangsstufe und die Sendestufe steuert, und
• ein Speicher, der ein Programm nach einem der Ansprüche 9 bis 14 enthält.

## Claims

1. A method of reprogramming a set of bidirectional objects (4, 10, 14, 16, 18, 20) of an installation, in particular a home automation installation, the objects of the installation having wireless emitting and receiving capacities and containing a common key, at least two objects of the installation being matched to allow sending an order from one object (16, 18, 20) of the pair to the other object of the pair (4, 10, 14) and executing the order by the other object (4, 10, 14), the reprogramming method comprising the steps of:
• pproviding (30) a new common key to the objects of the installation with the exception of an object to be excluded, the provision step comprising the generation of the new common key and the broadcast of the new generated common key, the broadcasting step comprising, when broadcasting the new common key from one object to another object, checking that the two objects contain the old common key; then
• when sending (32) an order from one object to another object which is matched thereto, checking (34) that the two objects contain the new common key, and
• refusing (38) to execute the order by the other object if the two objects do not contain the new common key, said method being **characterized by**:
• such as providing (30) a new common key to the objects of the installation with the exception of the object to be excluded, comprises the diffusion from one object of the pair to the other object of the pair of an encrypted value derived from the old common key.

2. The method of claim 1, **characterized in that** the checking step (34) is implemented, for two given objects, only during the first order following the provision of the new common key.

3. The method of claim 1 or 2, **characterized in that** the generation step is performed from a single object.

4. The method of claim 1 or 2, **characterized in that** the generation step takes is performed from two objects.

5. The method of any of claims 1 to 4, **characterized in that** the broadcasting step comprises a point-to-multipoint broadcast.

6. The method of any of claims 1 to 5, **characterized in that** the broadcasting step comprises a point-to-point broadcast.

7. The method of claim 6, **characterized in that** the point-to-point broadcast comprises a user action on each point.

8. The method of any of claims 1 to 4, **characterized in that** the broadcasting step comprises:
• a point-to-point broadcast among a subset of the objects;
• a point-to-multipoint broadcast to another subset of the objects.

9. A program for operating a bidirectional object (4, 10, 14) implemented by the bidirectional object (4, 10, 14), acting as an order receiver and having wireless emitting and receiving capacities, adapted to store at least one common key and at least one matching information, comprising:
a) a routine for generating a new common key;
b) a routine for transmitting a new common key to another object, comprising checking that the two objects contain the old common key;
c) a routine for receiving a new common key;
c) a routine for receiving an order;
d) a routine for checking, for an order received from a matched emitter object, the presence of the common key in the emitter object, and
e) a routine for refusing to execute the order if the check is negative
said program being **characterized in that** checking that the two objects contain the old common key, comprises broadcasting an encrypted value derived from the old common key.

10. The program of claim 9, **characterized in that** the checking routine is implemented, for a given matching, only during the first received order.

11. A program for operating a bidirectional object (16, 18, 20) implemented by the bidirectional object (16, 18, 20), acting as an order transmitter and having wireless emitting and receiving capacities, adapted to store at least one common key and at least one matching information, comprising:
a) a routine for generating a new common key;
b) a routine for transmitting a new common key to another object, comprising checking that the two objects contain the old common key;
c) a routine for receiving a new common key;
d) a routine for emitting an order to a matched destination object;
e) a routine for checking the presence of the common key in the destination object
said program being **characterized in that** checking that the two objects contain the old common key, comprises broadcasting an encrypted value derived from the old common key.

12. The program of claim 12, **characterized in that** the checking routine is implemented, for a given matching, only during the first emitted order.

13. The program of any of claims 9 to 12, **characterized in that** the generation routine comprises a subroutine for emitting a command for generating the common key to another object.

14. The program of any of claims 9 to 13, **characterized in that** it further comprises a routine for transmitting a new common key to several other objects.

15. A bidirectional object, having:
• a wireless receiving stage;
• a wireless emitting stage;
• a logical unit driving the receiving stage and the emitting stage, and
• a memory containing a program according to any of claims 9 to 14.
